# FASCICULE DE BREVET EUROPEEN

(11) **EP 0 663 738 B1**
(45) Date de publication et mention de la délivrance du brevet: **02.10.2002**
(21) Numéro de dépôt: 95400053.5
(22) Date de dépôt: 11.01.1995
(51) Int. Cl.: H04B 10/16

(54) **Procédé de transmission et liaison optique à multiplexage spectral avec amplification**
Übertragungsverfahren und optische Verbindung mit spektraler Multiplexierung und Verstärkung
Transmission method and amplified spectral multiplexed optical link

(30) Priorité: 13.01.1994 FR 9400320
(43) Date de publication de la demande: 19.07.1995
(73) Titulaire: ALCATEL, 75008 Paris (FR)
(72) Inventeur: Bayart, Dominique, F-92140 Clamart (FR); Clesca, Bertrand, F-75010 Paris (FR); Chesnoy, José, F-75014 Paris (FR)
(74) Mandataire: Fournier, Michel Robert Marie

(56) Documents cités:
- EP-A- 0 467 396
- GB-A- 2 257 320
- US-A- 4 989 200
- PATENT ABSTRACTS OF JAPAN vol. 17, no. 466 (E-1421) 25 Août 1993 & JP-A-05 110 511 (NEC)

## Description

La présente invention concerne notamment la réalisation d'une liaison à fibre optique apte à transmettre des informations simultanément dans plusieurs canaux spectraux. Typiquement quoique non nécessairement, les positions spectrales de tels canaux sont prédeterminées, les puissances des ondes porteuses d'information occupant ces canaux sont invariables dans le temps, et il est souhaitable que le gain présenté par des amplificateurs de cette liaison à ces ondes porteuses ait, dans chaque amplificateur, une même valeur dans tous ces canaux. La caractéristique selon laquelle la valeur du gain est la même dans tous les canaux est appelée une platitude de ce gain.

Dans une première liaison optique connue le nombre des canaux est constant et la platitude du gain est suffisamment assurée. Cependant, dans des réseaux de transmission comportant plusieurs noeuds reliés par des liaisons optiques, il est souhaitable que, dans chaque noeud, des ondes porteuses puissent être librement ajoutées dans des canaux disponibles ou que des canaux occupés puissent être libérés de toute onde porteuse, selon le principe dit d'abandon et d'insertion (en anglais "drop and insert"). Dans ce cas le nombre de canaux occupés dans une liaison du réseau varie, et, si on conservait le mode de réalisation de cette liaison connue, la constance et la platitude du gain ne serait plus réalisées.

La présente invention a notamment pour but de permettre de maintenir la platitude du gain des amplificateurs d'une liaison optique en présence de variations du nombre de canaux occupés dans un multiplex spectral à amplifier.

Elle a aussi pour but de permettre la réalisation simple d'un réseau de liaisons optiques fiable du genre mentionné ci-dessus.

Dans ces buts elle a notamment pour objet un procédé de transmission optique à multiplexage spectral avec amplification, procédé selon lequel des informations à transmettre sont portées par diverses ondes porteuses occupant respectivement divers canaux spectraux optiques et pouvant présenter un nombre et/ou des puissances variables, ces diverses ondes porteuses étant amplifiées par un même amplificateur présentant des gains respectifs pour ces divers canaux tout en présentant une puissance amplificatrice globale limitée, ce procédé étant caractérisé par le fait que des dispositions sont prises pour réaliser une égalité entre tous lesdits gains en présence de dites ondes porteuses présentant un nombre et des puissances fixes, la puissance d'une lumière de régulation qui est indépendante desdites ondes porteuses et qui a été amplifiée par ledit amplificateur étant asservie pour maintenir cette égalité en présence de variations du nombre et/ou des puissances desdites ondes porteuses.

On peut noter qu'un asservissement de la puissance d'une lumière de régulation amplifiée par un amplificateur a été proposé dans une deuxième liaison à multiplexage spectral connue dans laquelle le nombre des canaux spectraux occupés varie au cours du temps. Cette deuxième liaison connue est décrite dans le document EP-A-467 396 (Canon Kabushiki Kaisha). Il apparaît de ce dernier que l'asservissement de la puissance de sortie de la lumière de régulation permet d'assurer la constance du gain de l'amplificateur dans chaque canal spectral du multiplex. En raison de la réalisation de cet amplificateur sous la forme d'un composant semiconducteur, dont il est connu que le gain dépend très sensiblement du canal spectral considéré, il est clair que les dispositions décrites dans ce document ne permettent pas d'assurer une platitude même approximative du gain de cet amplificateur.

A l'aide des figures schématique ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue d'une liaison selon la présente invention.

La figure 2 représente une vue d'un amplificateur de la liaison de la figure 1.

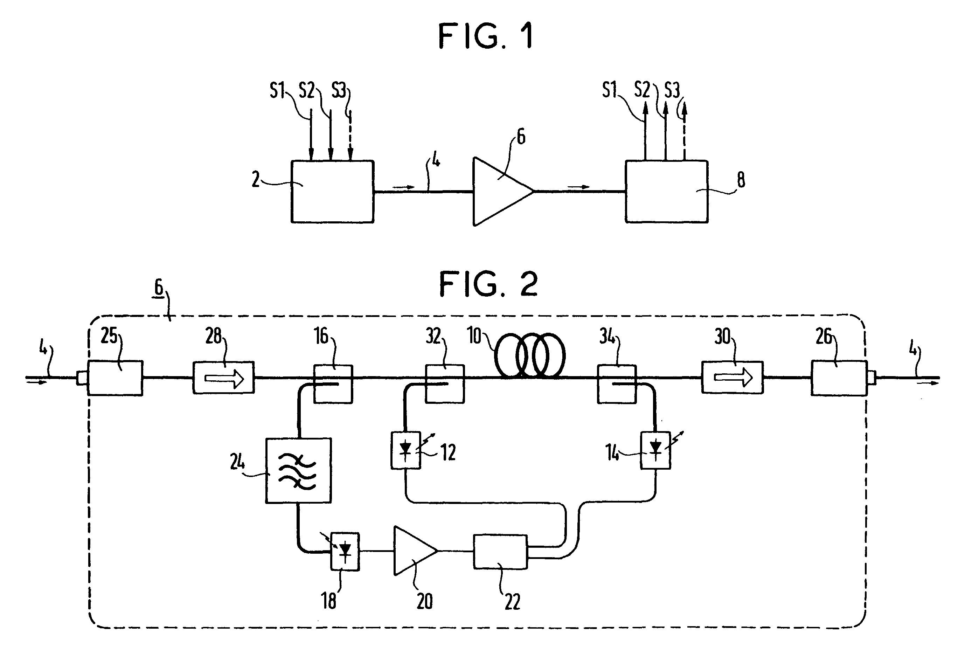

Conformément à la figure 1 et comme connu une liaison optique comporte les éléments suivants :
- Un ensemble émetteur 2. Cet ensemble reçoit simultanément plusieurs signaux à transmettre Si, S2, S3. Le nombre de ces signaux peut varier, le signal S3 pouvant être provisoirement absent. L'ensemble 2 émet en réponse simultanément plusieurs ondes porteuses de nature optique portant ces signaux dans plusieurs bandes spectrales distinctes. Ces bandes spectrales appartiennent à une pluralité de canaux de la liaison. Elles occupent certains de ces canaux. Une correspondance respective existe entre les signaux à transmettre, les ondes porteuses et les canaux occupés.
- Une ligne optique 4. Cette ligne reçoit les ondes porteuses et les guide ensemble sous la forme d'un multiplex spectral.
- Un amplificateur 6 est inseré dans la ligne 4 et amplifie le multiplex. Chaque onde porteuse reçoit ainsi une amplification. Le gain de cette amplification constitue un gain du canal correspondant à cette onde porteuse.
- Enfin un ensemble récepteur 8 reçoit les ondes porteuses en sortie de la ligne 4. Il restitue en réponse les signaux à transmettre.

L'amplificateur 6 comporte les éléments suivants :
- Un guide amplificateur 10 inséré en série dans la ligne 4. Ce guide est parcouru par le multiplex dans un sens direct. Il est typiquement constitué par une fibre optique dopée. Lorsqu'il est excité par une onde de pompe l'élément dopant réalise une amplification du multiplex. Il est typiquement constitué par des ions erbium Er⁺⁺⁺. Le gain de cette amplification dépend d'une caractéristique commandée de l'onde de pompe, cette caractéristique commandée étant typiquement la puissance de cette onde.
- Une source de pompe fournissant l'onde de pompe. Elle est typiquement constituée par deux diodes laser 12 et 14 émettant à une longueur d'onde de 1 480 nm. Elle définit la caractéristique commandée de l'onde de pompe.
- Des moyens de prélèvement de régulation. Ils prélevent, à partir du guide amplificateur 10, une lumière amplifiée par ce dernier. Cette lumière sera appelée ci-après "lumière de régulation". Ces moyens de prélèvement sont typiquement constitués par un coupleur optique 16.
- Enfin des moyens de commande de pompe 18, 20, 22. Ces moyens reçoivent la lumière de pilotage d'amplificateur. Ils commandent en réponse la source de pompe 12, 14 pour donner à la caractéristique commandée de l'onde de pompe une valeur assurant une amplification convenable du multiplex. Ils sont typiquement constitués par une diode photoréceptrice 18 pilotant un amplificateur électronique. Ce dernier fournit un courant d'alimentation aux deux diodes 12 et 14 constituant la source de pompe. Il est constitué par un préamplificateur 20 et un amplificateur de puissance 22.

Selon la présente invention l'amplificateur 6 comporte des moyens d'aplatissement spectral. Ces moyens seront précisés plus loin. Ils donnent une même valeur aux gains de tous les canaux occupés. De tels moyens sont connus dans le cas où lesdits canaux occupés ont un nombre, des positions et des largeurs spectrales prédéterminés et où lesdites ondes porteuses correspondantes ont des puissances prédéterminées. Cette valeur commune du gain sera appelée ci-après "gain de platitude".

La lumière de régulation de gain occupe spectralement une "bande de régulation". Elle est choisie pour que sa puissance croisse avec un gain de régulation constitué par un gain moyen présenté par le guide amplificateur dans la bande de régulation. La composition de cette lumière sera précisé plus loin.

Les moyens de commande de pompe 18, 20, 22 commandent la source de pompe 12, 14 en réponse à la lumière de régulation de gain de manière à asservir le gain de régulation à une valeur constante. Cette valeur est choisie pour que le gain d'un canal reste constamment égal au gain de platitude. Grâce à cela le gain de chacun des autres canaux reste lui aussi égal au gain de platitude même lorsque le nombre des canaux occupés par les ondes porteuses s'écarte dudit nombre prédéterminé et/ou lorsque la puissance d'au moins une onde porteuse s'écarte de ladite puissance prédéterminée.

Les moyens d'aplatissement spectral sont avantageusement constitués par le fait que le guide amplificateur 10 est une fibre optique à matrice fluorée dopée à l'erbium. La valeur du gain de platitude est adaptée à cette fibre.

Le guide amplificateur pourrait cependant aussi être constitué par exemple par une fibre de silice dopée à l'erbium. Cette fibre serait alors associée à un filtre optique présentant des atténuations différentes dans les différents canaux et placé par exemple en milieu de fibre. Les atténuations de ce filtre seraient choisies plus fortes dans les canaux où le gain propre de la fibre de silice serait le plus fort, de manière à obtenir la platitude de gain désirée.

De préférence les moyens de prélèvement de régulation 16 sont disposés en entrée du guide amplificateur 10. La lumière de régulation de gain est alors constituée par une émission spontanée amplifiée dite "contradirectionnelle" parce qu'elle se propage dans un sens inverse opposé audit sens direct.

De préférence l'amplificateur 6 comporte en outre un filtre optique 24 interposé entre les moyens de prélèvement de régulation et les moyens de commande de pompe 18, 20, 22 pour limiter la bande de régulation. Le domaine spectral occupé par les canaux s'étend par exemple entre 1 530 et 1 560 nm, et la bande de régulation s'étend par exemple entre 1 565 et 1 570 nm environ, en longueurs d'onde. Cette bande de régulation est choisie pour que la lumière de régulation de gain soit affectée aussi peu que possible par une variation du nombre des canaux occupés.

La lumière de régulation de gain pourrait cependant aussi être prélevée en sortie du guide amplificateur. La bande de régulation devrait alors être extérieure au domaine spectral occupé par les canaux de la liaison, de manière que cette lumière soit constituée seulement par une émission spontanée amplifiée.

Cette lumière pourrait enfin avoir une origine extérieure au guide amplificateur, l'important étant que sa puissance soit représentative du gain de l'amplificateur et soit aussi indépendante que possible du nombre et de la puissance des ondes porteuses.

L'amplificateur 6 comporte en outre deux bornes de connexion amont 25 et aval 26, deux isolateurs optiques amont 28 et aval 30, et deux multiplexeurs d'injection amont 32 et aval 34 pour injecter deux ondes de pompes fournies par les sources de pompe 12 et 14.

## Revendications

1. Procédé de transmission optique à multiplexage spectral avec amplification, procédé selon lequel des informations à transmettre sont portées par diverses ondes porteuses occupant respectivement divers canaux spectraux optiques, le nombre et/ou les puissances de ces ondes porteuses pouvant être variables, ces diverses ondes porteuses étant amplifiées par un même amplificateur présentant des gains respectifs pour ces divers canaux tout en présentant une puissance amplificatrice globale limitée, ce procédé étant **caractérisé par le fait que** des dispositions sont prises pour réaliser une égalité entre tous lesdits gains en présence d'un nombre fixe d'ondes porteuses ayant des puissances fixes, la puissance d'une lumière de régulation qui est indépendante desdites ondes porteuses et qui a été amplifiée par ledit amplificateur étant asservie pour maintenir cette égalité en présence de variations du nombre et/ou des puissances de ces ondes porteuses.

2. Liaison optique à multiplexage spectral avec amplification, ladite liaison utilisant une pluralité de canaux spectraux et comportant :
- un ensemble émetteur (2) apte à recevoir simultanément plusieurs signaux à transmettre (S1 S2, S3) et à émettre en réponse simultanément plusieurs ondes porteuses optique portant ces signaux en occupant respectivement plusieurs desdits canaux,
- une ligne optique (4) recevant lesdites ondes porteuses et les guidant ensemble sous la forme d'un multiplex de nature spectrale,
- un amplificateur (6) inseré dans ladite ligne optique et amplifiant les dites ondes porteuses, avec des gains propres aux canaux occupés par ces ondes, respectivement,
- et un ensemble récepteur (8) recevant lesdites ondes porteuses en sortie de ladite ligne et restituant en réponse lesdits signaux à transmettre,
- ledit amplificateur (6) comportant :
- un guide amplificateur (10) inséré en série dans ladite ligne (4) pour être parcouru par ledit multiplex dans un sens direct, ledit guide amplificateur étant dopé par un élément dopant propre à réaliser une amplification dudit multiplex en réponse à une excitation dudit élément dopant par une onde de pompe, un gain de cette amplification dépendant d'une caractéristique commandée de ladite onde de pompe,
- une source de pompe (12, 14) fournissant ladite onde de pompe et définissant sa dite caractéristique commandée,
- des moyens de prélèvement de régulation (16) prélevant, à partir dudit guide amplificateur (10), une lumière amplifiée par ce dernier et constituant une lumière de pilotage d'amplificateur,
- et des moyens de commande de pompe (18, 20, 22) recevant ladite lumière de pilotage d'amplificateur et commandant en réponse ladite source de pompe (12, 14) pour donner à ladite caractéristique commandée de l'onde de pompe une valeur assurant une amplification convenable dudit multiplex,
- cette liaison étant **caractérisée par le fait que** ledit amplificateur (6) comporte des moyens d'aplatissement spectral aptes à donner une même valeur aux gains de tous lesdits canaux occupés dans le cas où lesdits canaux occupés ont un nombre, des positions et des largeurs spectrales prédéterminés et où lesdites ondes porteuses correspondantes ont des puissances prédéterminées, ladite même valeur constituant un gain de platitude,
- ladite lumière de pilotage d'amplificateur étant constituée d'ondes autres que celles dudit multiplex et constituant une lumière de régulation de gain, ladite lumière de régulation de gain occupant spectralement une bande de régulation et étant choisie pour que sa puissance croisse avec un gain de régulation constitué par un gain moyen présenté par ledit guide amplificateur dans ladite bande de régulation,
- lesdits moyens de commande de pompe (18, 20, 22) commandant ladite source de pompe (12, 14) en réponse à ladite lumière de régulation de gain de manière à asservir ledit gain de régulation à une valeur constante telle que ledit gain d'un dit canal reste égal audit gain de platitude, grâce à quoi le gain de chaque dit canal reste égal audit gain de platitude même lorsque le nombre desdits canaux occupés par lesdites ondes porteuses s'écarte dudit nombre prédéterminé et/ou lorsque la puissance d'au moins une dite onde porteuse s'écarte de ladite puissance prédéterminée.

3. Liaison selon la revendication 2 **caractérisée par le fait que** lesdits moyens d'aplatissement spectral sont constitués **par le fait que** ledit guide amplificateur (10) est une fibre optique à matrice fluorée dopée à l'erbium, ledit gain de platitude étant adapté à ladite fibre optique.

4. Liaison selon la revendication 2 **caractérisée par le fait que** lesdits moyens de prélèvement de régulation (16) sont disposés en entrée dudit guide amplificateur (10), ladite lumière de régulation de gain étant constituée par une émission spontanée amplifiée contradirectionnelle se propageant dans un sens inverse opposé audit sens direct.

5. Liaison selon la revendication 4 **caractérisée par le fait que** ledit amplificateur (6) comporte en outre un filtre optique (24) interposé entre lesdits moyens de prélèvement de régulation et lesdits moyens de commande de pompe (18, 20, 22) pour limiter ladite bande de régulation.

6. Liaison selon la revendication 5 dans laquelle un domaine spectral occupé par lesdits canaux s'étend entre 1 530 et 1 560 nm, et ladite bande de régulation entre 1 565 et 1 570 nm environ, en longueurs d'onde.

## Patentansprüche

1. Verfahren zur optischen Übertragung im Wellenlängen-Multiplex mit Verstärkung, bei dem zu übertragende Informationen von diversen Trägerwellen getragen werden, die jeweils diverse optische spektrale Kanäle belegen, wobei die Zahl und/oder die Leistungen dieser Trägerwellen variabel sein können und diese diversen Trägerwellen von einem gleichen Verstärker verstärkt werden, der jeweils Verstärkungen für diese diversen Kanäle aufweist und dabei eine begrenzte Gesamtverstärkungsleistung hat, **dadurch gekennzeichnet, daß** Vorkehrungen getroffen werden, um eine Gleichheit zwischen allen Verstärkungen in Anwesenheit einer festen Zahl von Trägerwellen mit festen Leistungen zu realisieren, wobei die Leistung eines Regellichtes, das von den Trägerwellen unabhängig ist und von dem Verstärker verstärkt worden ist, geregelt wird, um diese Gleichheit bei Vorhandensein von Schwankungen der Zahl und/oder der Leistungen dieser Trägerwellen zu bewahren.

2. Optische Wellenlängen-Multiplexverbindung mit Verstärkung, welche eine Mehrzahl von spektralen Kanälen verwendet und umfaßt:
eine Senderanordnung, die in der Lage ist, gleichzeitig mehrere zu übertragende Signale (S1, S2, S3) zu empfangen und in Reaktion gleichzeitig mehrere optische Trägerwellen zu senden, die diese Signale tragen und dabei jeweils mehrere der Kanäle belegen,
eine optische Leitung (4), die die Trägerwellen empfängt und sie zusammen in Form eines Wellenlängenmultiplex führt,
einem Verstärker (6), der in die optische Leitung eingefügt ist und die Trägerwellen mit jeweils für die von diesen Wellen belegten Kanäle eigentümlichen Verstärkungen verstärkt,
und einer Empfängeranordnung (8), die die Trägerwellen am Ausgang der Leitung empfängt und als Reaktion die zu übertragenden Signale wiederherstellt,
wobei der Verstärker (6) umfaßt:
einen Verstärkerleiter (10), der in Reihe in die Leitung (4) eingefügt ist, um von dem Multiplex in einer Geradeausrichtung durchlaufen zu werden, wobei der Verstärkerleiter mit einem dotierenden Element dotiert ist, das geeignet ist, eine Verstärkung des Multiplex in Reaktion auf eine Erregung des dotierenden Elements durch eine Pumpwelle zu realisieren, wobei ein Verstärkungswert dieser Verstärkung von einem gesteuerten Merkmal dieser Pumpwelle abhängt,
eine Pumpquelle (12, 14), die die Pumpwelle liefert und deren gesteuertes Merkmal definiert,
Regelungs-Abgreifmittel (16), die von dem Verstärkerleiter (10) ein von letzterem verstärktes und ein Verstärkersteuerlicht darstellendes. Licht abgreifen,
und Pumpsteuermittel (18, 20, 22), die das Verstärkersteuerlicht empfangen und in Reaktion die Pumpquelle (12, 14) steuern, um dem gesteuerten Merkmal der Pumpwelle einen Wert zu geben, der eine geeignete Verstärkung des Multiplex gewährleistet,
wobei die Verbindung **dadurch gekennzeichnet ist, dass** der Verstärker (6) Mittel zur spektralen Abflachung umfaßt, die in der Lage sind, den Verstärkungswerten aller belegten Kanäle einen gleichen Wert in dem Fall zu geben, wo diese belegten Kanäle eine Anzahl, Positionen und spektrale Bereiche in vorgegebener Weise haben und wo die entsprechenden Trägerwellen vorgegebene Leistungen haben, wobei dieser gleiche Wert einen Abflachungsverstärkungswert darstellt,
wobei das Verstärkersteuerlicht aus anderen Wellen als denen des Multiplex gebildet ist und ein Verstärkungswert-Regellicht bildet, wobei das Verstärkungswert-Regellicht spektral ein Regelband belegt und so gewählt ist, daß seine Leistung mit einem Verstärkungsregelwert zunimmt, der durch einen mittleren Verstärkungswert des Verstärkerleiters in dem Regelgband dargestellt ist,
wobei die Pumpsteuermittel (18, 20, 22) die Pumpquelle (12, 14) in Reaktion auf das Verstärkungswert-Regellicht steuern, um den Regelungs-Verstärkungswert auf einem solchen konstanten Wert zu halten, dass der Verstärkungswert eines besagten Kanals gleich dem Abflachungsverstärkungswert bleibt, wodurch der Verstärkungswert jedes besagten Kanals gleich dem Abflachungsverstärkungswert auch dann bleibt, wenn die Zahl der von den Trägerwellen belegten Kanäle von der vorgegebenen Zahl abweicht und/oder wenn die Leistung wenigstens einer besagten Trägerwelle von der vorgegebenen Leistung abweicht.

3. Verbindung nach Anspruch 2, **dadurch gekennzeichnet, dass** die spektralen Abflachungsmittel dadurch gebildet sind, daß der Verstärkerleiter (10) eine optische Faser mit erbiumdotierter fluorhaltiger Matrix ist, wobei der Abflachungsverstärkungswert an die optische Faser angepaßt ist.

4. Verbindung nach Anspruch 2, **dadurch gekennzeichnet, dass** die Regelungs-Abgreifmittel (12) am Eingang des Verstärkerleiters (10) angeordnet sind, und dass das Verstärkungswert-Regellicht durch eine gegenläufige verstärkte spontane Emission gebildet ist, die sich in einer zur Geradeausrichtung entgegengesetzten Richtung ausbreitet.

5. Verbindung nach Anspruch 4, **dadurch gekennzeichnet, daß** der Verstärker (6) ferner ein optisches Filter (24) umfaßt, das zwischen den Regelungs-Abgreifmitteln und den Pumpsteuermitteln (18, 20, 22) angeordnet ist, um das Regelungsband zu begrenzen.

6. Verbindung nach Anspruch 5, bei der ein von den Kanälen belegter Spektralbereich sich zwischen Wellenlängen von 1.530 und 1.560 Nanometer erstreckt und das Regelungsband sich zwischen Wellenlängen von ca. 1.565 und 1.570 Manometer erstreckt.

## Claims

1. An optical transmission method using spectrum multiplexing with amplification, in which method data to be transmitted is carried by various carrier waves occupying respective optical spectrum channels, it being possible for the number and/or the power of the carrier waves to vary, the various carrier waves being amplified by a common amplifier having respective gains for the various channels, while having limited overall amplifying power, said method being **characterized by** the fact that provision is made to make all of said gains equal in the presence of a fixed number of fixed-power carrier waves, regulation light that is independent of said carrier waves and that is amplified by said amplifier being servo-controlled in power so as to maintain equality between said gains in the presence of variations in the number and/or in the power of the carrier waves.

2. An optical link using spectrum multiplexing with amplification, said link using a plurality of spectrum channels and including:
a transmitter assembly (2) capable of simultaneously receiving a plurality of signals to be transmitted (S1, S2, S3) and of responding by simultaneously transmitting a plurality of optical carrier waves carrying the signals by occupying respective ones of said channels;
an optical line (4) receiving said carrier waves and guiding them together in the form of a spectrum-type multiplex;
an amplifier (6) inserted in said optical line and amplifying said carrier waves, with respective gains that are specific to the busy channels occupied by said waves; and
a receiver assembly (8) receiving said carrier waves at the output of said line and responding by restoring said signals to be transmitted;
said amplifier (6) including:
an amplifier waveguide (10) inserted in series in said line (4) so as to pass said multiplex in a forward direction, said amplifier waveguide being doped with a doping element suitable for responding to being excited by a pump wave by applying amplification to said multiplex, the gain of the amplification depending on a controlled characteristic of said pump wave;
a pump source (12, 14) supplying said pump wave and defining said controlled characteristic thereof;
regulation tapping means (16) for tapping light from said amplifier waveguide (10), which light is amplified thereby and constitutes amplifier control light; and
pump drive means (18, 20, 22) receiving said amplifier control light and responding by driving said pump source (12, 14) so as to cause said controlled characteristic of the pump wave to take a value that ensures suitable amplification of said multiplex;
said link being **characterized by** the fact that said amplifier (6) includes spectrum flattening means capable of causing the gains of all of said busy channels to take the same value when said busy channels have a number, positions, and spectrum widths that are predetermined, and when the corresponding carrier waves have powers that are predetermined, said same value constituting a flatness gain;
said amplifier control light being constituted by carrier waves other than those of said multiplex and constituting gain regulation light, said gain regulation light occupying a regulation band in the spectrum, and being chosen so that its power increases with a regulation gain constituted by the mean gain presented by said amplifier waveguide in said regulation band;
said pump drive means (18, 20, 22) responding to said gain regulation light by driving said pump source (12, 14) so as to servo-control said regulation gain to a constant value so that said gain of one of said channels remains equal to said flatness gain, whereby the gain of each of said channels remains equal to said flatness gain even when the number of said busy channels occupied by said carrier waves deviates from said predetermined number and/or when the power of at least one of said carrier waves deviates from said predetermined power.

3. A link according to claim 2, **characterized by** the fact that said spectrum flattening means are constituted by said amplifier waveguide (10) being an optical fiber having a fluoride matrix that is doped with erbium, said flatness gain being matched to said optical fiber.

4. A link according to claim 2, **characterized by** the fact that said regulation tapping means (16) are disposed at the input of said amplifier waveguide (10), said gain regulation light being constituted by a reverse amplified spontaneous emission propagating in a backward direction that is opposite from said forward direction.

5. A link according to claim 4, **characterized by** the fact that said amplifier (6) further includes an optical filter (24) interposed between said regulation tapping means and said pump drive means (18, 20, 22) so as to limit said regulation band.

6. A link according to claim 5, in which a wavelength spectrum range occupied by said channels extends from 1,530 nm to 1,560 nm, and said regulation band extends from about 1,565 nm to about 1,570 nm.
